Europäisches Patentamt

European Patent Office

Office européen des brevets

(11) Numéro de publication: **0 091 856**
**B1**

(12) **FASCICULE DE BREVET EUROPEEN**

(45) Date de publication du fascicule du brevet: **18.05.88**

(21) Numéro de dépôt: **83400668.6**

(22) Date de dépôt: **30.03.83**

(51) Int. Cl.⁴: **B 65 G 47/51**

(54) **Procede de regulation du transfert de produits solides identiques entre des machines amont et aval de vitesses différentes.**

(30) Priorité: **02.04.82 FR 8206004**

(43) Date de publication de la demande:
**19.10.83 Bulletin 83/42**

(45) Mention de la délivrance du brevet:
**18.05.88 Bulletin 88/20**

(84) Etats contractants désignés:
**BE CH DE IT LI NL**

(56) Documents cités:
**DE-A-2 618 905**
**DE-B-1 124 584**
**DE-B-1 262 886**
**US-A-2 221 837**
**US-A-2 303 755**

(73) Titulaire: **BISCUITERIE NANTAISE - BN**
**Avenue Lotz-Cosse (près du Bd Alexandre Millerand)**
**F-44200 Nantes (FR)**

(72) Inventeur: **Cosse, Lionel**
**13, rue de Belleville**
**F-44100 Nantes (FR)**

(74) Mandataire: **Phélip, Bruno et al**
**c/o Cabinet Harlé & Phélip 21, rue de la Rochefoucauld**
**F-75009 Paris (FR)**

Courier Press, Leamington Spa, England.

## Description

La présente invention concerne les procédés permettant d'assurer la transfert sans interruption de produits solides de formes et de dimensions identiques et à pas minimum constant sur une unité de fabrication entre une machine amont débitant en continu et une machine aval plus rapide mais sujette à des arrêts de courte durée.

Dans certain domaines de fabrication en série, il est connu certains dispositifs s'intercalant entre la machine amont et la machine aval, lesquels ont pour but d'assurer un stockage temporaire des produits, stockage permettant d'accumuler les produits sortis de la machine amont pendant les arrêts de la machine aval et de redistribuer ces produits pendant la marche de ladite machine aval dont la cadence nominale est supérieure à celle de la machine amont. Dans le domaine de la fabrication de produits alimentaires, tels que la biscuiterie par exemple, il ne peut être envisagé de stocker des biscuits en grande quantité et pendant un temps prolongé. Les temps d'immobilisation de la machine avla doivent donc être très limités: il s'en suit que le dispositif régulateur doit présenter une grande souplesse de fonctionnement permettant un transfert sans àcoups des biscuits pour éviter tout risque de détérioration de ceux-ci. Les dispositifs de stockage dynamique utilisés sont généralement constitués par un jeu de transporteurs dont l'un est lié à la machine amont, l'autre à la machine aval et dont les mouvements relatifs sont commandés en fonction des vitesses amont et aval. Selon le brevet déposé par la demanderesse sous le No. 81 02045 (FR—A—2499033), les produits issus de l'appareil débiteur amont sont transportés à plat, en file et selon un pas maximal constant: an effectue une réduction de pas en déterminant un front de changement de pas, puis on transporte lesdits produits en file avec un pas minimal constant jusqu'à l'appareil aval. Simultanément, on détecte la présence de produits avant leur réduction de pas et l'on déplace le front vers l'un ou l'autre appareil en fonction du débit relatif de ceux-ci. La réduction de pas peut également s'effectuer en redressant les produits pour les faire passer de leur position à plat à une position plus ou moins inclinée ou sur chant. Le dispositif permettant la mise en oeuvre de ce procédé est constitué d'un transporteur d'entrée à bande sans fin de vitesse adaptée au débit de l'appareil amont et d'un transporteur de sortie à bande sans fin de vitesse inférieure ou égale à la vitesse d'entrée et adaptée au débit de l'appareil récepteur aval, les deux transporteurs étant parallélés entre eux et de préférence horizontaux, le transporteur d'entrée recouvrant partiellement dans sa partie aval le transporteur de sortie, le transfert des produits d'un transporteur à l'autre s'effectuant par l'intermédiaire d'un déversoir mobile en translation par rapport au transporteur de sortie; les déplacements duquel déversoir sont obtenus à l'aide d'un dispositif différentiel en liaison avec les moyens d'entraînement des transporteurs d'entrée et de sortie. Ce type de dispositif est inopérant dans le cas où les produits se présentent déjà selon un pas nominal constant à la sortie de la machine amont, la longueur disponible sur le transporteur étant constante. Il est également connu le type d'installation décrit dans le document DE—B—1 262886 qui a pour objet un dispositif permettant de réguler le transfert, sans modification de pas ou de position, de produits solides ou d'objets de formes et dimensions identiques débités en continu par une machine amont vers une machine réceptrice aval plus rapide mais assujettie à des arrêts de courte durée. Ce dispositif est consititué, d'une part d'un premier transporteur linéaire sans fin disposé horizontalement et entraîné dans le même sens et à la même vitesse que le transporteur dit d'entrée reliant la machine amont a un dispositif, et d'autre part, d'un deuxième transporteur linéaire sans fin disposé horizontalement, parallèle au premier, et entraîné dans le même sens et à la même vitesse que le transporteur dit de sortie reliant le dispositif à la machine aval, les deux transporteurs équipant le dispositif ainsi animé de mouvements de translation opposés étant mis en communication à l'aide d'un transporteur intermédiaire, lequel transporteur est animé d'un mouvement de défilement et d'un mouvement de translation parallèle aux deux transporteurs, la vitesse de translation du transporteur intermédiaire étant égale à la demi-différence des vitesses d'entrée et de sortie, la vitesse de défilement du transporteur étant telle que sa vitesse circonférentielle est égale à la demi-somme des vitesses d'entrée et de sortie.

Le document US—A—2 221837 se rapporte à un plateau tournant qui reçoit des biscuits en un point fixe d'un premier transporteur, à savoir son extrémité de déversement, pour les déposer en un point fixe d'un second transporteur à savoir son extrémité d'alimentation. Si le premier transporteur s'arrête, tout s'arrête.

Enfin, il est décrit au brevet US—2 302 775 une installation comportant deux transporteurs linéaires sans fin, disposés horizontalement dans un même plan et parallèlement l'un à l'autre, les produits transportés passant de l'un à l'autre au moyen d'un disque de transfert animé d'un seul mouvement de rotation autour de son axe. Selon une vitesse fixée arbitrairement, dans ce type d'installation le système d'accumulation placé en parallèle permet une déviation des produits excédentaires assurant un stockage momentané de ceux-ci et une réintégration de ceux-ci dans le circuit à l'aide d'un deuxième plateau.

L'invention a pour objet un procédé de régulation du transfert, sans modification de pas ou de position, de produits solides ou d'objets ainsi animés de mouvements de translation oppoées d'un mouvement de formes et de dmimensions identiques débités en continu par une machine amont vers une machine réceptrice aval plus rapide mais assujettie à des arrête de courte durée, procédé selon lequel on entraîne d'une part, un premier transporteur linéaire sans fin disposé horizontalement dans le même sens et à la même vitesse que le transporteur dit d'entrée reliant la machine amont au dispositif, et d'autre part un deuxième transporteur linéaire sans fin disposé horizontalement, parallèle au premier, dans le même sens et à la même vitesse que le transporteur dit de sortie reliant le dispositif à la machine aval, les deux transporteurs équipant le dispositif étant ainsi animés de mouvements de translation opposés et mis en communication l'un avec l'autre à l'aide d'un transporteur intermédiaire ce dernier etant animé d'un mouvement de défilement et d'un mouvement de translation parallèle aux deux transporteurs lineaires de façon que la vitesse de translation du transporteur intermédiaire soit egale à la demi-différence des vitesses d'entrée et de sortie, tandis que la vitesse de défilement du transporteur intermédiaire est telle que sa vitesse circonférentielle est égale à la demi-somme des vitesses d'entrée et de sortie (Procédé connu de DE—B—1 262 886). Ce procédé est caractérisé en ce que:

—les premier et second transporteurs sans fin linéaires sont situés dans un même plan horizontal, le transporteur intermédiaire étant un plateau circulaire ou un transporteur sans fin à tranjectoire demi-circulaire.

L'invention sera mieux comprise à l'aide de la description qui suit et des dessins annexés, lesquels illustrent un mode de réalisation du dispositif conforme à la présente invention. Ceux-ci représentent:

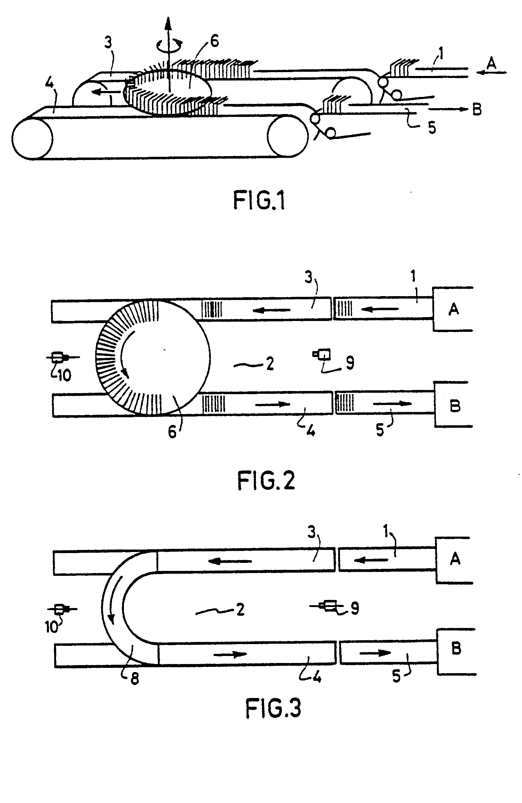

—en figure 1, une vue schématique en perspective du dispositif,

—en figure 2, une vue de dessus simplifiée du dispositif équipé d'un plateau circulaire,

—en figure 3, une vue de dessus d'une variante de réalisation dans laquelle le dispositif est équipé d'un transporteur demi-circulaire,

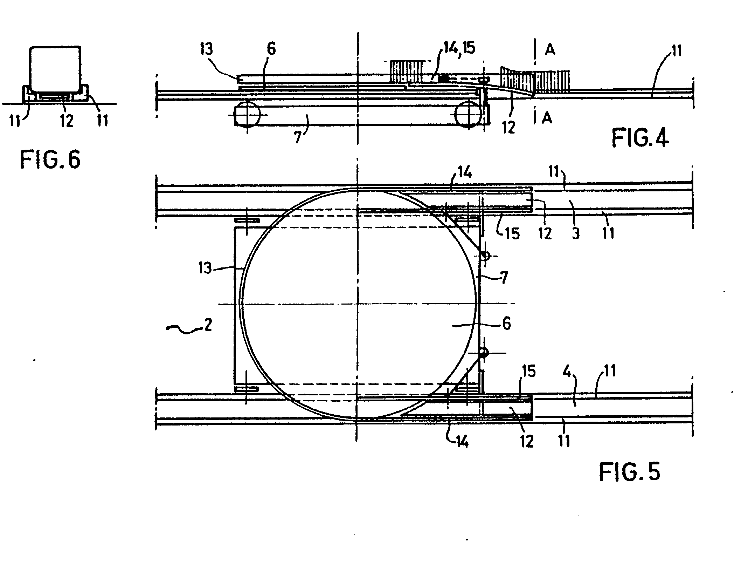

—en figure 4, une vue en élévation-coupe des moyens d'accès des biscuits sur le plateau circulaire,

—en figure 5, une vue de dessus correspondant à la figure 4,

—en figure 6, une section AA dans la zone d'arrivée des biscuits aux moyens d'accès des biscuits au plateau circulaire.

Tel qu'il est représenté, le dispositif est placé, dans l'exemple choisi, entre un poste A correspondant par exemple à la sortie d'un four de cuisson de biscuits et un poste B correspondant par exemple à une machine de conditionnement des biscuits. Cette dernière est généralement appelée à subir des arrêts de courte durée, dus par exemple, à des incidents de réalisation de l'emballage. Les biscuits sortant du four sont véhiculés sur un transporteur linéaire d'entrée 1 aboutissant au dispositif proprement dit. Celui-ci est constitué d'un bâti 2 comportant d'une part un transporteur linéaire sans fin 3 au type à bande par exemple, placé en alignement du transporteur d'entrée 1, et entraîné dans le même sens et à la même vitesse que celui-ci et d'autre part un transporteur linéaire sans fin 4 parallèle au transporteur 3 et dans un même plan horizontal, lequel transporteur 4 alimente un transporteur 5 dit de sortie entraîné dans le même sens et à la même vitesse, ce dernier étant destiné à alimenter en biscuits le poste 3. Les transporteurs 3 et 4 équipant le bâti, animés de mouvements de translation de sens opposées, sont mis en communication dans l'exemple illustré au moyen d'un plateau circulaire 6 situé sensiblement dans le même plan horizontal que les transporteurs et disposé entre ces derniers tangentiellement à chacun d'eux, et animé d'un mouvement de rotation autour d'un axe perpendiculaire à ce plan et passant par son centre. Pour assurer la continuité du transfert des biscuits en provenance du poste A, selon une vitesse supposée constante et sans interruption et compte-tenu de ce que la vitesse des tapis 4 et 5 supérieure à celle du tapis 3, peut varier, diminuer ou devenir nulle, la vitesse en rotation du plateau 6 est variable; cette vitesse du plateau doit nécessairement être ajustée avec celles des transporteurs 3 et 4 simultanément avec un entraînement en translation dudit plateau parallèlement aux dits transporteurs. A cet effect, le plateau est monté sur un chariot 7 circulant sur des rails fixés sur le bâti, l'entraînement en translation duquel chariot et l'entraînement en rotation du plateau étant obtenus selon des vitesses adaptées aux vitesses de défilement des transporteurs 3 et 4 au moyen de dispositifs difféntiels de type connu. Afin de permettre le stockage d'un nombre important de biscuits sur le transporteur 4 à la suite d'un ralentissement de la vitesse de défilement de celui-ci ou en cas d'arrêt relativement long de celui-ci, la longueur du bâti doit être prévue suffisamment importante pour admettre les déplacements en translation du chariot porte-plateau. Le transfert des biscuits s'effectuant selon un pas constant et leur succession interdisant tout glissement entre les transporteurs et le plateau 6, permet d'apparenter le dispositif à un dispositif différentiel dans lequel les deux transporteurs peuvent être assimilés à deux crémaillères avec lesquelles engrène un satellite auquel s'apparente le plateau circulaire. Le déplacement en translation du satellite étant toujours égal à la demi-différence des déplacements des deux crémaillères, il en résulte que la vitesse de translation du plateau doit être égale à la demi-différence des vitesses de défilement des transporteurs. De même, on peut en déduire que par apparentement avec la vitesse angulaire du satellite par rapport à celle des planétaires, la vitesse tangentielle du plateau doit être égale à la demi-somme des vitesses de défilement des transporteurs, c'est-à-dire des vitesses d'entrée et de sortie des biscuits sur le plateau.

La figure 3 illustre une variante de réalisation dans laquelle le moyen de mise en communication des transporteurs 3 et 4, est un transporteur sans fin, de trajectoire demi-circulaire 8, porté par le chariot 7 et situé sensiblement dans le même plan horizontal, les points d'entrée et de sortie dudit transporteur 8, sont en ligne avec lesdits transporteurs 3 et 4. Comme dans le cas de la version précédemment décrite, les vitesses de translation du chariot 7 et le défilement de la bande du transporteur demi-circulaire 8 restent dans les mêmes rapports avec les vitesses de défilement des transporteurs d'entrée 3 et de sortie 4 du dispositif.

La dispositif comporte à titre de sécurité deux commutateurs de fin de course 9 et 10 limitant les déplacements en translation du chariot 7. En fonctionnement normal, la vitesse de défilement du transporteur 4 étant supérieure à celle du transporteur 3, le chariot 7 se déplace en translation en direction des postes A et B jusqu'à la position de mise en contact avec le commutateur 9, lequel intervient sur les dispositifs d'entraînement des transporteurs 4 et 5 et provoque l'arrêt de ceux-ci. Les biscuits s'accumulent alors sur le transporteur 3 au fur et à measure de la translation du chariot 7 en direction opposée aux postes A et B: en cas d'arrêt prolongé de la machine aval, le chariot 7 vient en contact avec le commutateur 10, lequel commande l'arrêt des transporteurs 1 et 3. La durée d'arrêt estimée de la machine aval et la longueur prévue du bâti 2 en fonction de cette estimation font qu'en fonctionnement normal, le chariot 7 n'atteint que très rarement le commutateur 10, la machine amont ne devant être stoppée qu'en cas de réelle nécessité.

Les figures 4, 5 et 6 illustrent les moyens d'accès des biscuits au plateau circulaire 6, ainsi que les moyens de sortie dudit plateau. Les biscuits reposent sur les transporteurs, par appui de leurs deux angles intérieurs sur la feuillure des deux tasseaux latéraux 11 équipant lesdits transporteurs, une telle disposition laissant entre le tapis du transporteur et les biscuits un espace libre. Les biscuits accèdent au plateau circulaire 6 à l'aide d'une rampe 12 constituée par une languette s'inscrivant dans l'écartement des tasseaux 11 et en-dessous de la ligne des biscuits: cette rampe est montée solidaire du chariot 7. La partie supérieure de la rampe est située au niveau du plateau et borde celui-ci au plus près. Le guidage latéral des biscuits est assuré à l'aide d'une bordure extérieure semi-circulaire 13 prolongée longitudinalement par deux retours 14; de même il est également prévu deux bordures longitudinales intérieures 15 parallèles aux retours 14, l'ensemble de ces bordures étant fixées sur le chariot 7. Dans la variante comportant un transporteur de trajectoire demi-circulaire, l'accès des biscuits et leur sortie peut s'effectuer d'une façon identique.

L'invention ne se limite pas aux modes de réalisation spécialement décrits, elle embrasse toutes les variantes possibles à condition que celles-ci ne soient pas en contradiction avec l'objet de chacune des revendications annexées à la présente description.

Le dispositif, objet de l'invention, peut être utilisé dans tous les cas de transfert d'objets ou de produits solides de formes et de dimensions identiques disposés selon un pas constant.

## Revendications

1. Procédé de régulation du transfert, sans modification de pas ou position, de produits solides ou d'objets de formes et de dimensions identiques débités en continu par une machine amont vers une machine réceptrice aval plus rapide mais aussujettie à des arrêts de courte durée, procédé selon lequel on entraîne d'une part, un premier transporteur linéaire (3) sans fin disposé horizontalement dans le même sens et à la même vitesse que le transporteur dit d'entrée (1) reliant la machine amont à un dispositif, et d'autre part un deuxième transporteur linéaire sans fin (4) disposé horizontalement, parallèle au premier, et entraîné dans le même sens et à la même vitesse que le transporteur dit de sortie (5) reliant le dispositif à la machine aval, les deux transporteurs équipant le dispositif ainsi animés de mouvements de translation opposés étant mis en communication l'un avec l'autre à l'aide d'un transporteur intermédiaire (6, 8), ce dernier étant animé d'un mouvement de défilement et d'un mouvement de translation parallèles aux deux transporteurs linéaires (3 et 4) de façon que la vitesse de translation du transporteur intermédiaire soit égale à la demi-différence des vitesses d'entrée et de sortie, tandis que la vitesse de défilement du transporteur intermédiaire est telle que sa vitesse circonférentielle est égale à la demi-somme des vitesses d'entrée et de sortie, ce procédé étant, en outre, caractérisé en ce que:

—les premier et second transporteurs sans fin linéaires (3, 4) sont situés dans un même plan horizontal, le transporteur intermédiaire étant un plateau circulaire (6) ou un transporteur sans fin à trajectoire demi-circulaire (8).

2. Procédé selon la revendication 1, caractérisé en ce qu'un chariot support (7) du plateau circulaire (6) ou transporteur demi-circulaire (8) se déplace en translation sur des rails solidaires du bâti, les déplacements en translation duquel chariot étant limités à chacune des extrémités du bâti par un commutateur de fin de course (9 ou 10) commandant selon le cas l'arrêt de la machine aval ou celui de la machine amont.

## Patentansprüche

1. Verfahren zur Regelung der Übertragung von festen Produkten oder Gegenständen identischer Form und Abmessungen die fortlaufend von einer vorgeordneten Maschine zur einer nachgeordneten, schneller laufenden, aber Stopps von kurzer Dauer unterworfenen Empfangsmaschine abgegeben werden un deren Abstand oder Position keine Änderung erfährt, wobei man gemäß dem Verfahren einerseits einen ersten linearen, horizontal angeordneten Endlosförderer (3) in demselben Sinn und mit derselben Geschwindigkeit wie den genannten Zuförderer (1), der die vorgeordnete Maschine mit einer Vorrichtung verbindet, und andererseits einen zweiten linearen Endlosförderer (4) antreibt, der horizontal und parallel zum ersten Förderer angeordnet ist und in demselben Sinn und mit derselben Geschwindigkeit angetrieben wird wie der genannte Abförderer (5), der die Vorrichtung mit der nachgeordneten Maschine verbindet, wobei die beiden Förderer, die die Vorrichtung zu entgegengesetzten Translationsbewegungen anregen, miteinander mittels eines Zwischenförderers (6, 8) in Wirkverbindung stehen, wobei dieser letztere zu einer Ablaufbewegung und zu einer zu den beiden linearen Förderern (3, 4) parallelen Translationsbewegung angeregt wird, derart, daß die Translationsgeschwindigkeit des Zwischenförderers gleich der halben Differenz der Zuförder- und der Abfördergeschwindigkeiten ist, während die Ablaufgeschwindigkeit des Zwischenförderers derart ist, daß seine Umfangsgeschwindigkeit gleich der halben Summe der Zuförder- und der Ablaufgeschwindigkeitten ist, wobei das Verfahren des weiteren dadurch gekennzeichnet ist, daß der erste und der zweite Endlosförderer (3, 4) in derselben Horizontalebene gelegen sind und daß der Zwischenförderer eine kreisförmige Platte (6) oder ein Endlosförderer (8) mit halbkreisförmiger Förderbahn ist.

2. Verfahren nach Anspruch 1, dadurch gekennzeichnet, daß sich ein Stützwagen (7) der kreisförmigen Platte (6) oder des halbkreisförmigen Endlosförderers (8) auf festen Schienen des Gestells translationsmäßig verstellt und daß die Translationsverstellungen des genannten Wagens an jedem Ende des Gestells durch einen Wegendschalter (9 oder 10) begrenzt sind, der gegebenenfalls den Stopp der nachgeordneten Maschine oder der vorgeordneten Machine steuert.

**Claims**

1. Process for regulating the transfer, without any change in spacing or in position, of solid products or articles of identical shapes and sizes delivered continuously from an upstream machine towards a downstream receiving machine faster, but subject to brief stops, according to which process, on the one hand, a first endless linear conveyor (3) arranged horizontally is driven in the same direction and at the same speed as the so-called entry conveyor (1) connecting the upstream machine to a device and, on the other hand, a second endless linear conveyor (4) arranged horizontally parallel to the first is driven in the same direction and at the same speed as the so-called exit conveyor (5) connecting the device to the downstream machine, the two conveyors equipping the device thus driven in opposite translational movements, being placed in communication with one another by means of an intermdediate conveyor (6, 8), the latter being driven in an advancing movement and a translational movement parallel to the two linear conveyors (3 and 4), in such a way that the translational speed of the intermediate conveyor is equal to half the difference between the entry and exit speeds, whilst the advancing speed of the intermediate conveyor is such that its circumferential speed is equal to half the sum of the entry and exit speeds, this process also being characterized in that:

—the first and second endless linear conveyors (3, 4) are arranged in the same horizontal plane, the intermediate conveyor being a circular platform (6) or an endless conveyor of semi-circular path (8).

2. Process according to Claim 1, characterized in that a carriage (7) supporting the circular platform (6) or semi-circular conveyor (8) executes a translational movement on rails fixed to the frame, the translational movements of the said carriage being limited to each of the ends of the frame by means of a limit switch (9 or 10) controlling the stopping of the downstream machine or that of the upstream machine, as required.

FIG.1

FIG.2

FIG.3

FIG.6

FIG.4

FIG.5